# EUROPÄISCHE PATENTANMELDUNG

(11) **EP 4 365 139 A1**
(43) Veröffentlichungstag der Anmeldung: **08.05.2024**
(21) Anmeldenummer: 23208294.1
(22) Anmeldetag: 07.11.2023
(51) Int. Cl.: C02F 1/28, B01J 20/02, B01J 20/04, B01J 20/08, B01J 20/10, B01J 20/32, C02F 101/10, C02F 103/00

(54) **SUBSTRAT ZUR PHOSPHATADSORPTION UND VERFAHREN ZU DESSEN HERSTELLUNG**

(30) Priorität: 07.11.2022 DE 102022129354
(71) Anmelder: Funke Kunststoffe GmbH, 59071 Hamm-Uentrop (DE)
(72) Erfinder: FUNKE, Norbert, 48324 Sendenhorst (DE); FUNKE, Hans-Günter, 48324 Sendenhorst (DE)
(74) Vertreter: Patentanwälte Olbricht Buchhold Keulertz

(57) **Zusammenfassung**

Die Erfindung betrifft ein Substrat zur Behandlung von Oberflächenwasser, wobei das Substrat ein offenporiges Trägermaterial enthält, welches an seiner Oberfläche mit Eisen- und / oder Aluminium-Ionen versehen ist, die ein Adsorbens zur Phosphatadsorption bilden. Zur Herstellung des Substrats schlägt die Erfindung vor, dass zur Schaffung eines Adsorptionsmediums Calciumsilikathydrat (CSH) in Form einer Vielzahl offenporiger Partikel bereitgestellt wird und das CSH als Trägermaterial mit einer Flüssigkeit benetzt wird, die Eisen- und / oder Aluminium-Ionen aufweist.

## Beschreibung

Aus der DE 102 00 616 C5 ist ein Substrat zur Behandlung von Oberflächenwasser bekannt, das sowohl mechanisch wirksam ist, indem es filterwirksames das Zurückhalten von Partikeln ermöglicht, als auch biologisch wirksam ist, indem es den Abbau oder die Umwandlung von Stoffen ermöglicht. Niederschläge, die auf verkehrsbelastete Flächen gelangen, nehmen dort verkehrstypische Stoffe auf wie z. B. Öle, Kraftstoffe und Partikel in Form von Gummi- oder Bremsenabrieb. Das Oberflächenwasser, das von diesen Flächen abläuft, ist dementsprechend mit den jeweiligen Stoffen und Partikeln belastet.

In einem ersten Anwendungsbeispiel kann das Substrat als Schüttung in längliche Mulden oder Rinnen eingebracht werden, die an die verkehrsbelastete Fläche grenzen, wobei die Rinnen- oder Muldenabschnitte beispielsweise aus Beton oder anderen mineralischen Werkstoffen oder aus Kunststoff bestehen können. Während Rinnen das darin aufgenommene Wasser zu einem bestimmten Punkt leiten, sind Mulden mit vielen Austrittsöffnungen versehen, so dass das hereingelaufene Wasser an Ort und Stelle nach unten in den Boden versickert werden kann. Die Rinnen und Mulden können befahrbar ausgestaltet sein, indem sie mit einem entsprechend stabilen Gitter abgedeckt sind.

In einem zweiten Anwendungsbeispiel kann das Substrat in einem Filterbecher angeordnet werden, der in einem auch als "Gully" bezeichneten Straßenablauf angeordnet wird.

Oberflächenwasser, welches von einem Parkplatz in die Rinne oder Mulde fließt, oder welches von der Straße in einen Straßenablauf abfließt, nimmt auf seinem Weg - zusätzlich zu ohnehin vorhandenen Verschmutzungen - insbesondere auch die erwähnten verkehrstypischen Stoffe mit und trägt diese in das Substrat ein. Das belastete Wasser wird in dem Substrat behandelt und verlässt das Substrat in einem erheblich weniger belasteten Zustand.

Abgesehen von der Belastung mit verkehrstypischen Stoffen werden Wässer insbesondere auch durch Phosphate belastet. Phosphate kommen nicht nur in der Landwirtschaft vor, sondern auch in den menschlichen und tierischen Ausscheidungen, in den Wässern von Galvanisationsanlagen, sie sind in Weichmachern, Öl-Additiven sowie in Waschmitteln enthalten. Der Phosphateintrag in Gewässer ist eine der Ursachen für ein schnelles Algenwachstum. Auch etwa 2 Millionen Haushalte, die ihre Abwässer über Kleinkläranlagen reinigen, tragen durch Phosphateinträge zur Eutrophierung der Binnengewässer bei. Steigende Jahresdurchschnittstemperaturen und längere Sonneneinstrahlung begünstigen zudem das Algenwachstum, welches ein erhebliches Problem für andere Lebewesen im Wasser darstellt.

In klärtechnischen Anlagen wird vorzugsweise mit Fällungsmitteln auf Basis von Eisen- und Aluminiumchloriden, -hydroxiden oder -sulfaten gearbeitet. Die Fällungstechnik erfordert umfangreiche Dosier- und Messtechniken und eine Sicherheitstechnik, die verhindert, dass es zu einem gewässerschädlichen Eintrag von Fällungsmittel kommt. Aufgrund dieser Anforderungen wird die Phosphatbindung mit Hilfe von Fällungsmitteln in erster Linie im professionellen Bereich angewendet, mit geschultem Personal und einer kontinuierlichen Aufsicht, welche die genutzten Anlagen und die durchgeführten Prozesse im Blick behält.

Aus der DE 37 90 061 T1 ist eine Methode zur Behandlung von Abwässern bekannt, bei welcher Wasser mit einem porösen Kontaktmaterial behandelt wird, das hauptsächlich aus Calciumsilikaten besteht. Als Schaumbildner zur Erreichung einer hohen Porosität des Kontaktmaterials wird ein metallisches Schaummittel verwendet wie z. B. Aluminiumpulver.

Aus der DE 44 30 371 A1 sind eine Wasserbehandlungskeramik und ein Verfahren zu ihrer Herstellung bekannt, wobei hydratisiertes Kalziumsilikat, ein aluminiumhaltiges Tonmineral und ein porenbildendes Mittel mit Wasser geknetet, die geknetete Mischung geformt und der Formling gebrannt wird. Die so erhaltene Keramik schafft Lebensräume für Bakterien und Protonen, die rasch wachsen, und erreicht verbesserte pH-Pufferkapazitäten. Eine Entfernung von Phosphat aus dem Wasser wird nicht erwähnt.

Aus der DE 197 45 664 A1 sind ein Verfahren zur Reinigung eines arsenhaltigen Fluids, ein Granulat und ein Herstellungsverfahren des Granulates bekannt. Ein Gemisch aus einer Trägersubstanz, die körnig ausgebildet und reaktionsträge ist, und bis 30 Gew.-% Eisenpulver wird hergestellt. Anschließend wird das Gemisch unter Ausschluss von Sauerstoff zu Granulat gebrannt. Bei dem Verfahren zur Reinigung eines arsenhaltigen Fluides, insbesondere von arsenhaltigem Grundwasser, wird das Fluid durch einen Reaktor geleitet, der mit dem Granulat gefüllt ist. Eine Entfernung von Phosphat aus dem Wasser wird nicht erwähnt.

Der Erfindung liegt die Aufgabe zugrunde, die Adsorption von im Wasser enthaltenen Phosphat mit Mitteln zu ermöglichen, die möglichst wirkungsvoll und gleichzeitig anwender- und umweltfreundlich sind und ein dazu geeignetes Substrat anzugeben sowie ein Verfahren zur Herstellung eines solchen Substrats anzugeben.

Diese Aufgabe wird gelöst durch ein Substrat nach Anspruch 1 und ein Herstellungsverfahren nach Anspruch 5. Vorteilhafte Ausgestaltungen sind in den Unteransprüchen beschrieben.

Die Erfindung schlägt mit anderen Worten ein offenporiges Substrat vor, das als Phosphat bindendes Adsorptionsmedium ein mit Aluminiumionen oder Eisenionen oder einem Gemisch aus beiden versehenes Trägermaterial enthält. Das Adsorptionsmedium besteht folglich erstens aus dem Trägermaterial und zweitens aus dem Adsorbens für Phosphat, nämlich in Form von Aluminiumionen und / oder Eisenionen, mit denen das Trägermaterial versehen ist. Das Substrat kann entweder ausschließlich dieses Adsorptionsmedium enthalten, oder das Adsorptionsmedium kann einen Anteil eines Substrats bilden, indem es z. B. dem eingangs beschriebenen, aus der DE 102 00 616 C5 bekannten Substrat beigemischt wird, so dass dieses Substrat dann sowohl die Belastung des Wassers durch verkehrstypische Stoffe verringern kann als auch die Belastung des Wassers durch Phosphat.

Das Adsorptionsmedium liegt typischerweise als Granulat vor, so dass es durch die Granulatform und die Offenporigkeit eine gro-ße Oberfläche bereitstellt, an welche Aluminiumionen und / oder Eisenionen angelagert werden können, wenn das Trägermaterial mit ihnen versehen wird. Diese große Oberfläche ermöglicht erstens die Aufnahme einer großen Menge von Aluminiumionen und / oder Eisenionen und im Gebrauch die dementsprechend wirksame Adsorption einer großen Menge von Phosphat.

Anders als durch Zugabe des Adsorbens in flüssiger Form, wie dies z. B. für Fe₃-haltige Flüssigkeiten bekannt ist, führt die Behandlung von phosphathaltigem Wasser mit dem erfindungsgemäßen Substrat nicht zu einer Fällungsreaktion, so dass das Phosphat nicht ausgefällt, sondern vielmehr an dem Substrat angelagert wird. Somit eignet sich das erfindungsgemäße Substrat für Anwendungen, bei denen - anders als z. B. in Kläranlagen - das Erzeugen von Flocken vermieden werden soll. Während die Flocken sich praktisch kaum kontrolliert im Wasser verteilen können, bewirkt das erfindungsgemäße Substrat zuverlässig eine Immobilisierung des Phosphat-Adsorbens-Komplexes, so dass dieser später kontrolliert entsorgt werden kann.

Das erfindungsgemäße Adsorptionsmedium kann z. B. eingesetzt werden, um Oberflächenwasser zu behandeln, welches von verkehrsbelasteten Flächen in Mulden oder Rinnen oder Straßenabläufe abfließt. Das erfindungsgemäße Adsorptionsmedium könnte dafür einem bekannten Substrat wie dem eingangs beschriebenen, aus der DE 102 00 616 C5 bekannten Substrat beigemischt werden, so dass es ca. 30% des Substratgemisches ausmacht und die Wirkung des bisher bekannten Substrats um die Phosphatbindung erweitert.

Das erfindungsgemäße Adsorptionsmedium kann weiterhin z. B. eingesetzt werden, um Wasser im Bereich von Kläranlagen zu behandeln, z. B. in Form einer der Kläranlage nachgeschalteten Behandlungsstufe zur Nachklärung des Wassers. Diese Anwendung kann insbesondere bei Kleinkläranlagen vorgesehen sein, wie sie bei Häusern zu finden sind, die nicht an die öffentliche Kanalisation angeschlossen sind. Dabei kann eine Kaskaden-Anordnung vorgesehen sein, so dass das Wasser in mehreren Behandlungsstufen behandelt wird.

Das erfindungsgemäße Adsorptionsmedium kann beispielsweise in Schachtbauwerken wie z. B. Abwasserschächten eingesetzt werden oder in Schächten, die zur oben erwähnten Nachklärung dienen. Wenn in den Schachtbauwerken Filtersiebe oder Filterbeutel eingesetzt werden, deren Durchströmbarkeit nicht durch ausgefällte Flocken beeinträchtigt werden soll, kann vorteilhaft eine Schüttung des erfindungsgemäßen Substrats verwendet werden.

Das erfindungsgemäße Adsorptionsmedium kann z. B. zur so genannten Seetherapie eingesetzt werden, also zur Behandlung stehender oder nur schwach durchströmter Gewässer wie Seen oder Teiche. Falls eine ggfs. vorhandene natürliche Strömung nicht ausreicht, kann mittels einer Pumpe das zu behandelnde Wasser durch das Substrat geführt werden. Im Vergleich dazu, Phosphat auszufällen, so dass es ggf. mit anderen Partikeln von Fischen oder anderen Wasserlebewesen aufgenommen wird, kann es zusammen mit dem Substrat entnommen und somit vollständig aus dem Wasser entfernt werden.

Das erfindungsgemäße Adsorptionsmedium kann aufbereitet werden, indem das mit Phosphat gesättigte Substrat gewaschen wird. Dabei werden sowohl das Phosphat als auch das Adsorbens in Form der Aluminiumionen und / oder Eisenionen von dem Trägermaterial entfernt, so dass das Phosphat anschließend verfügbar ist und auch seinerseits weiterverwendet werden kann. An die Oberfläche des gewaschenen Trägermaterials kann erneut Adsorbens angelagert werden, z. B. durch Benetzung. Das somit wiederaufbereitete Adsorptionsmedium kann entweder ausschließlich als neu einsetzbares Substrat verwendet werden oder als anteiligen Beimischung in einem Substrat, das auch frisch hergestelltes, noch nicht eingesetztes Adsorptionsmedium enthält.

Die Schaffung eines wirkungsvollen Phosphat-Binders kann vorteilhaft durch die gezielte Beladung eines Trägermaterials mit den Aluminiumionen und / oder Eisenionen erreicht werden. Dies betrifft einerseits die Konzentration, in welcher die jeweiligen Ionen auf dem Trägermaterial vorliegen, und andererseits das Mischungsverhältnis der verschiedenen Ionen, falls das Substrat sowohl Aluminiumionen als auch Eisenionen enthält. Dadurch können sowohl die Beladungskapazität als auch spezifische Rezepturen variabel an ein bestimmtes Einsatzgebiet bzw. einen bestimmten Anwendungsbereich angepasst werden.

Die Erfindung betrifft weiterhin einen wirkungsvollen Phosphat-Binder - unabhängig davon, wie er hergestellt worden ist, wobei der Phosphat-Binder als Adsorptionsmedium einen Anteil des erfindungsgemäßen Substrats bilden kann oder sogar als einziger Bestandteil das Substrat bilden kann. Der Phosphat-Binder kann beispielsweise wie folgt hergestellt werden:
Ein offenporiges Calciumsilikathydrat ("CSH") hat eine chemische Zusammensetzung und Struktur, die einem porösen Leichtbetongranulat gleicht, und weist folglich eine sehr große Oberfläche auf. Es weist einen vorteilhaft hohen pH-Wert auf und wird zunächst in an sich bekannter Weise hergestellt, wie dies beispielsweise aus der Herstellung von Kalksandstein oder Katzenstreu bekannt ist, und für die Herstellung des Phosphat-Binders in Form einer Vielzahl von Partikeln bereitgestellt. Anschließend werden die Partikel mit Aluminium- und Eisen III- Lösungen "beladen", indem sie mit entsprechenden Flüssigkeiten benetzt werden. Gelöste Phosphate können durch Metallkationen, besonders durch Aluminium- und Eisenkationen, in schwerlösliche Verbindungen gebracht werden. Um Eisen und Aluminium in höherer Konzentration in Lösung zu bekommen, wird Eisen und Aluminium mit Säure gelöst. Es entsteht Eisen (III)-chlorid und Aluminiumhydroxychlorid mit Eisenkonzentrationen zwischen 10 und 15 % Fe³⁺ und Aluminiumkonzentrationen zwischen 20 und 25 % Al₂O₃. Bei der Beaufschlagung der gelösten Verbindungen auf das CSH wird die Säure von den Carbonaten neutralisiert, die im Trägermaterial CSH enthalten sind. Die für die Phosphatbindung notwendigen Eisen- und Aluminiumkationen verbleiben dabei auf der Oberfläche des Trägermaterials haften.

Die zur Beladung verwendeten Lösungen können beispielsweise über Sprühdüsen dosiert aufgetragen werden, was den Vorteil bietet, dass das CSH auch bei Verwendung von Lösungen mit niedrigen pH-Werten geschont werden kann. Alternativ können die Lösungen als Tauchbad bereitgestellt werden, durch welches das CSH-Granulat geführt wird. Dass Anteile der verwendeten Lösungen als Aerosole in die Luft gelangen, kann dadurch weitestgehend vermieden werden, zudem kann eine intensivere Beladung des CSH-Granulats mit den Metallionen erfolgen. Durch Einstellung der Prozessparameter, z. B. durch die Temperaturführung und / oder durch die Verweildauer des CSH im Tauchbad, kann eine unerwünschte Schädigung des CSH-Granulats minimiert werden und eine zu große, unwirtschaftliche Eindringtiefe der Metallionen in das CSH verhindert werden.

Der erfindungsgemäße Phosphatbinder weist ein CSH-Trägermaterial auf, das mit Aluminium- und Eisenionen beladen ist. Diese können insbesondere in Form von Al₂O₃ und Fe³⁺ vorliegen.

Die Erfindung weist mehrere Vorteile auf:
Es wird kein körniges Adsorptionsmittel produziert, was bis in den Kern hinein aus Eisen- bzw. Aluminiumhydroxiden bestehen würde. Die im "Inneren" befindlichen Atome kämen nicht zur Wirkung, da nur die an den Oberflächen befindlichen Adsorber die aktiven Bindungsplätze zur Verfügung stellen. Im Vergleich dazu werden erfindungsgemäß die adsorptiven Substanzen in erheblichem Umfang eingespart, was wirtschaftlich und auch in ökologischer Hinsicht vorteilhaft ist.

Durch das Verfahren werden sehr hohe Adsorptionskapazitäten erreicht, was insbesondere durch das intensive Aufsprühen der Eisen- bzw. Aluminiumatome in das offenporige Calciumsilikathydrat hinein ermöglicht ist.

Die hydraulische Leistung des erfindungsgemäßen Phosphatadsorbers kann über die gezielte Auswahl der Korngrößenzusammensetzung des Trägermaterials gesteuert werden.

Sowohl die "Aluminium-zu-Eisen-Relation" als auch die Konzentrationen der jeweiligen Beladungs-Flüssigkeiten können frei eingestellt werden. So sind Rezepturen herstellbar, die einen an ein bestimmtes Einsatzgebiet optimal angepassten Phosphatbinder ergeben, welcher die jeweils gewünschte Konzentration an Aluminium- und / oder Eisenionen oder das gewünschte Mischungsverhältnis zwischen beiden Ionenarten aufweist. Beispielsweise kann so ein Phosphatbinder hergestellt werden, der für den Anwendungsbereich der Abwasserbehandlung abwasserspezifisch ausgestaltet ist, beispielsweise an die Inhaltsstoffe und Konzentrationen eines Abwassers angepasst ist, welches in einem bestimmten Wirtschaftsbetrieb oder in einer bestimmten kommunalen Kläranlage anfällt. Falls sich Änderungen der Inhaltsstoffe und Konzentrationen eines Abwassers ergeben, kann durch Verwendung eines dementsprechend angepassten Substrats flexibel darauf reagiert werden und jeweils eine optimale Behandlung des Abwassers auch nach derartigen Änderungen ermöglicht werden.

Auch kann direkt Einfluss genommen werden auf möglicherweise erwünschte oder unerwünschte Begleitelemente.

Durch die poröse Struktur des Phosphatbinders aufgrund des verwendeten CSH-Trägermaterials wird zusätzlich eine gute Filterleistung für abfiltrierbare Stoffe und somit auch für daran gebundene Schadstoffe erreicht. Beispielsweise kann partikulär gebundener Phosphor durch Filtration und Sedimentation abgetrennt werden. Da das gelöste Phosphat eine hohe Bioverfügbarkeit hat und dementsprechend zu einer Überdüngung / Eutrophierung der Gewässer mit dem dann folgenden Algenwachstum führen kann, ist es vorteilhaft, wenn der Phosphatanteil im Wasser insbesondere im Hinblick auf diese gelöste Fraktion verringert werden kann. Dies wird erfindungsgemäß mittels der

Aluminium- und Eisenionen erreicht.

Die unerwünschte Einleitung von Eisen und Aluminium, auch von Sulfaten und Chlorid, wie dies in den Fällungstechniken vorkommt, wird erfindungsgemäß durch die Bindung der Aluminium- und Eisenionen an das CSH-Trägermaterial minimiert.

## Patentansprüche

1. Substrat zur Behandlung von Oberflächenwasser,
**dadurch gekennzeichnet,**
**dass** das Substrat ein offenporiges Trägermaterial enthält, welches an seiner Oberfläche mit Eisen- und / oder Aluminium-Ionen versehen ist, die ein Adsorbens zur Phosphatadsorption bilden.

2. Substrat nach Anspruch 1,
**gekennzeichnet durch**
offenporiges Calciumsilikathydrat (CSH) als Trägermaterial.

3. Substrat nach Anspruch 1 oder 2,
**dadurch gekennzeichnet,**
**dass** die Aluminiumionen in Form von Al₂O₃ vorliegen.

4. Substrat nach einem der vorhergehenden Ansprüche,
**dadurch gekennzeichnet,**
**dass** die Eisenionen in Form von Fe³⁺ vorliegen.

5. Verfahren zur Herstellung eines Substrats nach einem der vorhergehenden Ansprüche,
wobei zur Schaffung eines Adsorptionsmediums Calciumsilikathydrat (CSH) in Form einer Vielzahl offenporiger Partikel bereitgestellt wird,
und das CSH als Trägermaterial mit einer Flüssigkeit benetzt wird, die Eisen- und / oder Aluminium-Ionen aufweist.

6. Verfahren nach Anspruch 5,
**dadurch gekennzeichnet,**
**dass** die Flüssigkeit auf das CSH aufgesprüht wird.

7. Verfahren nach Anspruch 5,
**dadurch gekennzeichnet,**
**dass** die Flüssigkeit als Tauchbad bereitgestellt wird, durch welches die CSH-Partikel geführt werden.

8. Verfahren nach einem der Ansprüche 5 bis 7,
**dadurch gekennzeichnet,**
**dass** zunächst der Anwendungsbereich ermittelt wird, in dem das Substrat zum Einsatz kommen soll,
und **dass** anschließend eine Flüssigkeit bereitgestellt wird, deren Konzentration von Eisenionen in der Flüssigkeit bestimmt wird in Abhängigkeit von dem ermittelten Anwendungsbereich.

9. Verfahren nach einem der Ansprüche 5 bis 8,
**dadurch gekennzeichnet,**
**dass** zunächst der Anwendungsbereich ermittelt wird, in dem das Substrat zum Einsatz kommen soll,
und **dass** anschließend eine Flüssigkeit bereitgestellt wird, deren Konzentration der Aluminiumionen in der Flüssigkeit bestimmt wird in Abhängigkeit von dem ermittelten Anwendungsbereich.

10. Verfahren nach einem der Ansprüche 5 bis 9,
**dadurch gekennzeichnet,**
**dass** zunächst der Anwendungsbereich ermittelt wird, in dem das Substrat zum Einsatz kommen soll,
und **dass** anschließend eine Flüssigkeit bereitgestellt wird, die sowohl Eisen- als auch Aluminium-Ionen aufweist, wobei das Mischungsverhältnis von Eisen- und Aluminiumionen in der Flüssigkeit bestimmt wird in Abhängigkeit von dem ermittelten Anwendungsbereich.

11. Verfahren nach einem der Ansprüche 5 bis 10,
**dadurch gekennzeichnet,**
**dass** zur Herstellung der Flüssigkeit Eisen und / oder Aluminium mit einer Säure gelöst wird.

12. Verfahren nach Anspruch 11,
**dadurch gekennzeichnet,**
**dass** die Flüssigkeit mit einer Eisenkonzentration von 10 bis 15 % Fe³⁺ hergestellt wird.

13. Verfahren nach Anspruch 11,
**dadurch gekennzeichnet,**
**dass** die Flüssigkeit mit einer Aluminiumkonzentration von 20 bis 25 % Al₂O₃ hergestellt wird.

14. Verwendung eines Substrats nach einem der Ansprüche 1 bis 4 zur einem Klärwerk nachgeschalteten Nachklärung von Wasser.

15. Verwendung eines Substrats nach einem der Ansprüche 1 bis 4 zur Behandlung von Wasser in einem Schachtbauwerk.

16. Verwendung eines Substrats nach einem der Ansprüche 1 bis 4 zur Behandlung eines stehenden oder schwach durchströmten Gewässers.
